Europäisches Patentamt

European Patent Office

Office européen des brevets

(19)

(11) Publication number: **0 020 375**
**B1**

# EUROPEAN PATENT SPECIFICATION

(12)

(45) Date of publication of patent specification: **03.11.82**

(51) Int. Cl.³: **F 28 D 1/04**

(21) Application number: **79900994.9**

(22) Date of filing: **24.11.78**

(86) International application number:
**PCT/US78/00174**

(87) International publication number:
**WO 80/01104 29.05.80 Gazette 80/12**

(54) **HEAT EXCHANGER HAVING INCLINED TUBES.**

| | |
|---|---|
| (43) Date of publication of application:<br>**07.01.81 Bulletin 81/1**<br><br>(45) Publication of the grant of the patent:<br>**03.11.82 Bulletin 82/44**<br><br>(84) Designated Contracting States:<br>**DE FR GB**<br><br>(56) References cited:<br>**BE - A - 642 218**<br>**DE - A - 1 933 688**<br>**DE - A - 2 144 465**<br>**FR - A - 562 676**<br>**FR - A - 1 586 070**<br>**FR - A - 2 199 104**<br>**FR - A - 2 269 053**<br>**FR - A - 2 361 618**<br>**FR - A - 2 386 005**<br>**GB - A - 398 110**<br>**GB - A - 466 539**<br>**GB - A - 513 199**<br>**GB - A - 1 000 017**<br>**GB - A - 1 213 819**<br>**US - A - 2 733 899**<br>**US - A - 3 080 916**<br>**US - A - 4 034 804**<br>**US - A - 4 116 265** | (73) Proprietor: **CATERPILLAR TRACTOR CO.**<br>**100 Northeast Adams Street**<br>**Peoria Illinois 61629 (US)**<br><br>(72) Inventor: **HESTON, Donald W.**<br>**1121 West Sturgeon Lane**<br>**Chillicothe, IL 61523 (US)**<br>Inventor: **Miller, Charles R.**<br>**R. R. No.2**<br>**Metamora, IL 61548 (US)**<br><br>(74) Representative: **Jackson, Peter Arthur et al,**<br>**GILL JENNINGS & EVERY 53 to 64, Chancery Lane**<br>**London WC2A 1HN (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Heat exchanger having inclined tubes

This invention relates to a heat exchanger and, more particularly, to a core construction for increasing heat rejection and improving air flow.

Heat exchangers of the type used in earthmoving vehicles must have sufficient capacity to cool the engine by the passage of air through and around the heat exchange element. In the past, it has been necessary sometimes to use large fans operating at high speeds to provide sufficient air flow through the heat exchange element. Unfortunately, large fans use excessive power and cause vibration and noise which is undesirable. Because of current noise regulations, the use of large fans is now restricted and other means must be found to provide effective cooling without excessive noise.

One way to increase cooling capacity is described in U.S. Patent Specification No. 4,034,804 and French Specification No. 2,199,104. These disclose a radiator operable with a flow of air for cooling a quantity of water and formed as zigzag or folded walls, each of which contains air ducts. Cooling water pipes are arranged in a number of flat cores, the upper and lower sides of which are located in the front and rear planes, respectively, of the radiator. The cores are connected together alternately on their front and rear sides in an airtight manner.

The zigzag pattern increases the cooling capacity by increasing the surface area exposed to the flow of air without increasing the size of the radiator. There is, however, a problem with debris plugging the cores and reducing cooling capacity. Under some field conditions where large quantities of airborne fuzz and debris are present, the debris and fuzz may be readily caught by the front edges of the water tubes which are flush with the front of the core and also become embedded between the cooling fins.

At the junction of the cores at the rear of the radiator, air flows downward which increases the opportunity for airborne debris to collect on the fins thereby reducing cooling. Furthermore, at low vehicle speeds there may not be any air flow at the junction hence no cooling. U.S. 4,034,804 recognizes that plugging may be a problem and provides a fine gauze to be placed around the outside of each core. This in effect is a mere screen which itself can become plugged.

Since the air flow changes direction abruptly inside the radiator from a horizontal flow to a downward vertical flow, areas exist where there is little or no flow and plugging occurs. Because of the change in direction of the air flow, even the fine gauze will clog.

U.S. Patent Specification No. 4,076,072 discloses the use of reversable cores which can be rotated 180° to expose a clean core surface to incoming air while the reverse, clogged core surface is cleaned by the exit flow of air through the core. While this reversibility allows the clogged cores to be cleaned easily, reversing the cores takes time and is done when the radiator is visibly clogged. Apparatus is provided for rotating all the cores at one time, but again this is done is response to a visual observation.

It has also been proposed to provide a heat exchanger similar to the heat exchanger of U.S. Specification No. 4,076,072 which uses recessed tubes, closely spaced fins, and a space or gap at the junction so that the inner directly adjacent legs are spaced apart. Unfortunately, the extremely close fin spacing, 0.79 to 1.57 fins per mm, restricts air flow through the core; yet this close spacing is necessary to prevent plugging.

It is therefore desirable to have a heat exchanger with closely spaced fins which does not unduly restrict air flow through the cores. It is also desirable to increase the heat rejection of the core for a given frontal area thereby increasing the cooling effectiveness of the heat exchanger.

In accordance with the present invention, a heat exchanger comprises first and second cores each defined by a respcective plurality of fins and having an air inlet surface the cores being mounted in a substantially "V" configuration with the air inlet surface facing towards one another and the included angle between the air inlet surfaces being between 20° and 70°, and each core having a single row of tubes, with an elongate cross-section, the longitudinal planes (T) of the tubes parallel to the elongate dimensions of the cross-sections of the respective ones of the tubes of each core being substantially parallel to one another characterised in that the tubes extend through the fins of each core and are spaced inwardly from the respective air inlet surface with each row of tubes being substantially parallel to the respective air inlet surface; and in that the longitudinal planes (T) of the tubes are offset towards the general direction of incident airflow in use at an angle (a, b) of between 100° and 120° to the plane of the air inlet surface of the respective core and at an angle (X', Y'), of between 40° and 60° to the central plane bisecting the angle between the air inlet surfaces of the two cores.

Preferably the ends of the cores at the apex of the "V" are spaced apart a distance in the range of between 2 and 10 mm.

Preferably the fins of each core are chamfered at the corner of the core at the apex of the "V".

By chamfering the corners of the cores they can be fitted more closely together to increase cooling capacity for a given overall heat exchanger dimension. Angularly orienting the tube relative to the core axis also orients the tube relative to the incoming air-stream to increase the heat rejection. Thus, the heat exchanger has closely spaced truncated fins and angularly oriented tubes to decrease the pressure drop across the cores thereby increasing cooling effectiveness.

Two examples of a heat exchanger in accordance with the present invention are illustrated in the accompanying drawings, in which:—

Figure 1 is a diagrammatic cross-section through one example;

Figure 2 is an enlarged part sectional view of the cores of the Figure 1 example showing the angular orientation of the tubes relative to the axis of each core;

Figure 3 shows part of a core of a second example; and,

Figure 4 is a part sectional view taken on the line IV—IV in Figure 1.

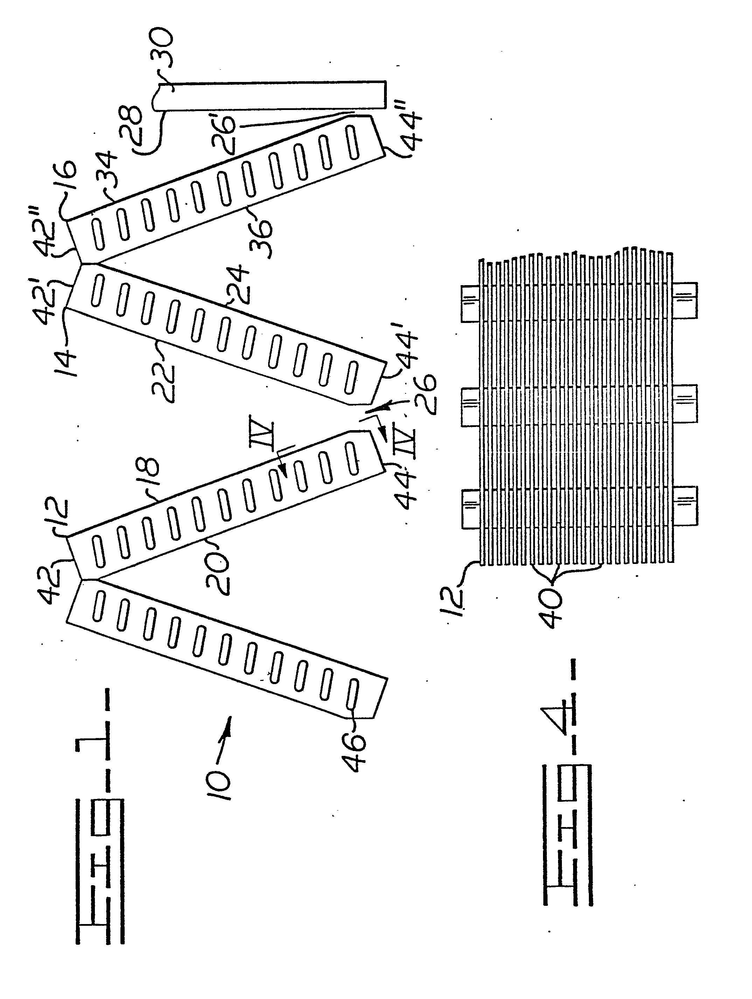

Referring to Figure 1, a self-purging heat exchanger 10 has a number of cores, such as first, second and third cores 12, 14 and 16 for example, arranged in a zigzag pattern as viewed from the top or along a horizontal cross-section.

The first core 12 has an inlet surface 18 and an outlet surface 20. The second core 14 has an inlet surface 22 and an outlet surface 24 and is positioned with the inlet surface 22 facing toward the inlet surface 18 of the first core 12. The cores 12, 14 are angularly oriented one relative to the other in a general "V" configuration with the inner, directly adjacent ends being spaced apart a distance in the range of about 2 to 10 mm. If the space or gap 26 is less than about 2 mm wide, air flow therethrough is extremely limited and debris will accumulate in the gap 26. Conversely, if the gap 26 is more than about 10 mm wide, there is too much airflow therethrough which reduces the airflow through the cores 12, 14 and particularly along the inlet surfaces 18, 22.

A gap 26' is provided between an end 44'' of the core 16 and the surface 28 of a supporting frame 30. The gap 26' has a width in the range of about 3 to 10 mm. If the gap 26' is less than about 3 mm, there is insufficient width for debris to escape. If the gap 26' is larger than about 10 mm, aiflow through the core 16 and particularly along its inlet surface 34 is reduced.

The cores 12, 14 define an included angle in the range of about 20 to 70 degress while core 16 and frame 30 define an angle in the range of about 10 to 35 degrees. The core 16 and frame 30 also have a general "V" configuration. Cores 16 and 12, 14 may be used together with advantage, particularly where two or more liquids require cooling.

The third core 16 has an outlet surface 36 and is positioned with the outlet surface 36 facing toward the outlet surface 24 of the second core 14 in a general inverted "V" configuration. The inner directly adjacent ends of the inverted "V" are arranged to be substantially airtight so that no air flows therethrough but is diverted through the inlet surfaces 22, 34. The third core 16 may be substantially parallel to the first core 12 or may be nonparallel thereto. Additionally, each "V" may be symmetrical or nonsymmetrical with other "V's".

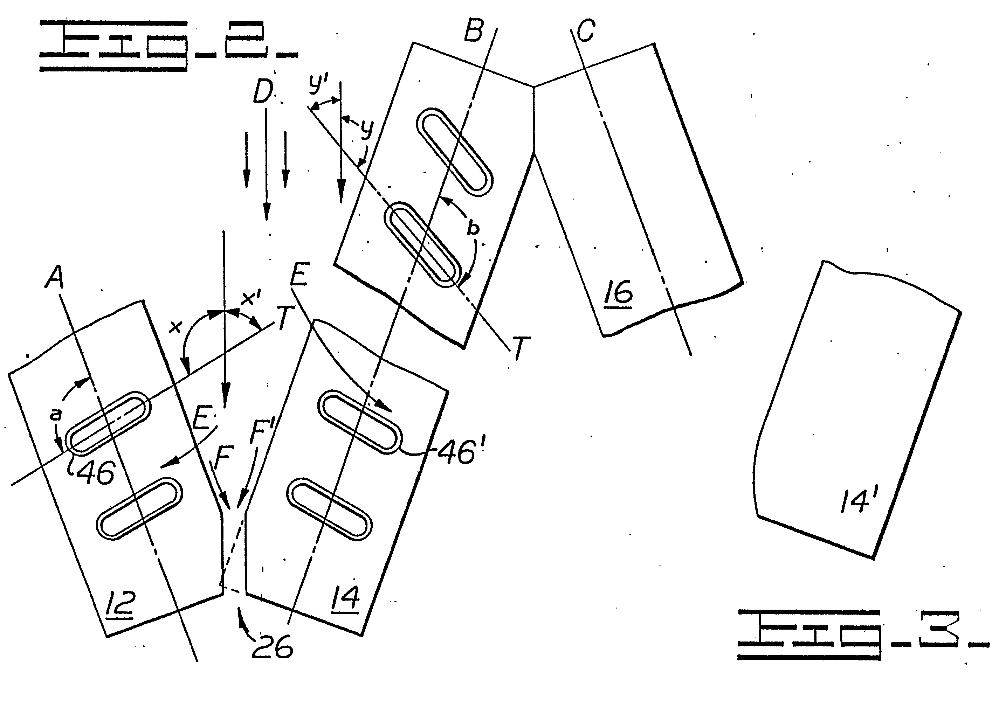

Referring to FIGS. 1 and 4, each core, core 12 for example, is comprised of a plurality of closely spaced fins 40 defining the inlet and outlet surfaces 18, 20 and defining inlet and outlet end surfaces 42, 44. The number of fins per mm is in the range of about 0.79 to 1.57. The fins preferably have a straight longitudinal profile but can have a wavy, serpentine profile. Straight fins are preferred from the standpoint of purging while wavy fins dissipate more heat for given core dimensions.

Referring to FIGS. 1—4, each core has at least one tube 46 extending through the fins 40 and spaced from the inlet surface 18 a distance in the range of about 2 to 4 mm. The tube 46 is preferably spaced from the outlet surface 20 a similar distance. At distances less than about 2 mm the tube 46 is exposed to debris which is snagged and held by the tube 46 thereby contributing to core plugging. At distances greater than about 4 mm, heat transfer from the front of the tube 46 adjacent the inlet surface 18 is affected and the fins 40 are subject to mechanical stress and bending.

Each core has a thickness in the range of about 15 to 40 mm as measured between the inlet and outlet surfaces 18, 20.

The tubes are spaced apart about 10 mm or so and have a thickness in the range of about 2 to 3 mm.

By this construction a heat exchanger 10 is formed which has a core thickness to hydraulic diameter of about 10 to 50. The hydraulic diameter is defined as four times the flow area divided by the perimeter of the opening for the flow and refers to the space between the fins 40, not within the tubes 46. It is this construction which, while providing adequate cooling and not plugging, creates a pressure drop across the cores and therefore does not offer maximum heat rejection. The heat rejection is improved by the construction as set forth below.

Referring to Figure 2, the first core 12 has an axis "A" and the second core 14, has an axis "B". The tube 46 has a transverse axis "T" oriented with respect to the axis "A" at an angle a in the range of about 100 to 120 degrees. Similarly, tube 46' has its axis 'T' oriented with respect to the axis "B" at an angle b in the range of about 100 to 120 degrees. The first and second cores 12, 14 are angularly oriented one relative to the other at angle c in the range of 20 to 70 degrees as previously mentioned.

By this construction, the axes, "A", "B" of the first and second cores 12, 14 are each angularly oriented in a range of about 120 to 140 degrees relative to the direction "D" of the fluid stream. At angles less than about 120 degrees, the fluid stream is reflected by the tubes 46 in a direction opposite to direction "D" thereby impeding the fluid stream and creating a greater pressure drop across the core. At angles greater than about 140 degrees, the air flows generally over the tubes but the flow path length is increased which increases the pressure loss. By inclining the tubes 46 at an angle of about 120 to 140 degrees, instead of at 110 or 180 degrees, heat rejection is improved by about 3 to 6 percent which is a significant gain. This construction produces incidence angles X', Y' in the range of about 40 to 60 degrees. The incidence angle is typically defined as the supplement of angles X and Y so that an incidence angle of zero is derived where the air flow is aligned with the tubes and flows over the inlet edge of tubes first.

Referring to Figures 2 and 3, the first core 12 is truncated at the corner defined by its inlet surface 18 and outlet end 44. The second core 14, 14' is truncated at the corner defined by its inlet surface 22 and outlet end 44' and is spaced from the first core 12 a distance in the range of 2 to 10 mm at the truncated corners. Each of the cores 12, 14, 16 is truncated at the corner defined by the respective outlet surface 20, 24, 36 and inlet end 42, 42', 42'' with the truncated corners abutting the immediately adjacent core.

The truncated corners are preferably chamfered (FIG. 2) but can be of a rounded configuration (FIG. 3). The chamfers preferably have a width in the range of about 1.5 to 8 mm. A chamfer about 1.5 mm wide at the two opposite corners of each core reduces the projected frontal area of each core by about 3 mm while reducing core width by about 3 1/2 percent. By tipping the tubes to an incidence angle of about 120 to 140 degrees and providing chamfers about 1.5 mm wide, heat rejection for a given total frontal area increases by about 4 to 6 percent. The square corners can be truncated because they are the part of the fins furthest from the tubes and thus transmit less heat. Tipping the tubes allows a larger chamfer to be made, hence only opposite corners need be chamfered rather than all four corners.

During operation, air approaches the heat exchanger 10 from the front in direction "D". Because the tubes 46 are inclined with respect to the direction "D" of the air stream, the air is urged over the tube surfaces and between the tubes as indicated by arrow "E".

The cores are fitted into a smaller space because the opposite corners are truncated. By having the gap 26 between the adjacent truncated corners, two results are achieved. First, debris entering between the cores has a place to exit and, second, air flowing through the gap 26 causes a tangential flow "F" parallel to the inlet surfaces of the cores. Thus, the flow is divided into a ocmponent "E" which flows over and between the tubes 46 and a smaller component "F" which flows out through the gap 26.

## Claims

1. A heat exchanger (10) comprising first and second cores (12, 14) each defined by a respective plurality of fins (40) and having an air inlet surface (18, 22) the cores being mounted in a substantially "V" configuration with the air inlet surfaces facing towards one another and the included angle between the air inlet surfaces being between 20° and 70°, and each core having a single row of tubes (46, 46'), with an elongate cross-section, the longitudinal planes (T) of the tubes parallel to the elongate dimensions of the cross-sections of the respective ones of the tubes of each core being substantially parallel to one another, characterised in that the tubes (46, 46') extend through the fins of each core and are spaced inwardly from the respective air inlet surface with each row of tubes being substantially parallel to the respective air inlet surface; and in that the longitudinal planes (T) of the tubes are offset towards the general direction of incident airflow in use at an angle (a, b) of between 100° and 120° to the plane of the air inlet surface of the respective core and at an angle (X', Y'), of between 40° and 60° to the central plane bisecting the angle between the air inlet surfaces of the two cores.

2. A heat exchanger (10) according to claim 1, wherein the ends of the cores at the apex of the "V" are spaced apart a distance in the range of between 2 and 10 mm.

3. A heat exchanger (10) according to claim 1 or claim 2, wherein the fins (40) of each core are chamfered at the corner of the core at the apex of the "V".

## Revendications

1. Echangeur de chaleur (10) comprenant un premier et un second éléments (12, 14), dont chacun comporte un certain nombre d'ailettes (40) et a une surface d'entrée d'air (18, 22), ces éléments étant montés suivant une disposition pratiquement en "V" avec les surfaces d'entrée d'air tournées l'une vers l'autre et formant entre elles un angle de 20 à 70°, chaque élément n'ayant qu'une seule rangée de tubes (46, 46') présentant une section allongée, les plans longitudinaux (T) des tubes, parallèles aux grands axes des sections des tubes de chaque élément étant pratiquement parallèles entre eux, caractérisé en ce que les tubes (46, 46') traversent les ailettes de chaque élément et sont espacés vers l'intérieur par rapport à la surface d'entrée d'air correspondante, chaque rangée de tubes étant pratiquement parallèle à la surface d'entrée d'air correspondante; et en ce que les plans longitudinaux (T) des tubes sont décalés vers la direction général du courant d'air incident, en fonctionnement, d'un angle (a, b) compris entre 100° et 120° par rapport au plan de la surface d'entrée d'air de l'élément correspondant et suivant un angle (X', Y') compris entre 40° et 60°, par rapport au plan central bissectant l'angle entre les surfaces d'entrée d'air des deux éléments.

2. Echangeur de chaleur (10) selon la revendication 1, dans lequel les extrémités des éléments, au sommet du "V", sont espacées d'une distance comprises entre 2 et 10 mm.

3. Echangeur de chaleur (10) selon la revendication 1 ou 2, dans lequel les ailettes (40) de chaque élément sont biseautées au coin de celui-ci qui est situé au sommet du "V".

## Patentansprüche

1. Wärmeaustauscher (10) mit ersten und zweiten Kernen (12, 14), von denen jeder durch eine entsprechende Vielzahl von Rippen (40) definiert ist und mit einer Lufteinlaßoberfläche (18, 22), wobei die Kerne in einer im wesentlichen "V"-Form angeordnet sind, und zwar mit aufeinander zuweisenden Lufteinlaßoberflächen, wobei der zwischen den Lufteinlaßoberflächen eingeschlossene Winkel zwischen 20 und 70° liegt, wobei ferner jeder Kern eine einzige Reihe von Rohren (46, 46') mit einem langgestreckten Querschnitt besitzt, und wobei die Längsebenen (T) der Rohre parallel zu den langgestreckten Abmessungen der Querschnitte der entsprechenden Rohre jedes Kerns im wesentlichen parallel zueinander verlaufen dadurch gekennzeichnet, daß sich die Rohre (46, 46') durch die Rippen jedes Kerns erstrecken und mit Abstrand nach innen gegenüber der entsprechenden Lufteinlaßoberfläche angeordnet sind, wobei jede Reihe aus Rohren im wesentlichen parallel zu der entsprechenden Lufteinlaßoberfläche verläuft, und daß die Längsebenen (T) der Rohre versetzt sind zur allgemeinen Richtung der einfallenden Luftströmung hin, und zwar im Gebrauch mit einem Winkel (a, b) von zwischen 100° und 120° bezüglich der Ebene der Lufteinlaßoberfläche des entsprechenden Kerns, und mit einem Winkel (X', Y') von zwischen 40° und 60° gegenüber der Mittelbene, welche den Winkel zwischen den Lufteinlaßoberflächen der beiden Kerne halbiert.

2. Wärmeaustauscher (10) nach Anspruch 1, wobei dei Enden der Kerne am Scheitel des "V" voneinander mit einem Abstand im Bereich zwischen 2 und 10 mm angeordnet sind.

3. Wärmeaustauscher (10) nach Anspruch 1 oder 2, dadurch gekennzeichnet, daß die Rippen (40) jedes Kerns an der Ecke des Kerns am Scheitel des "V" verjüngt sind.

FIG-1

FIG-4

0020 375

Fig_2_

Fig_3_

0 020 375